# EUROPEAN PATENT APPLICATION

(11) **EP 2 572 970 A1**
(43) Date of publication of application: **27.03.2013**
(21) Application number: 11783677.5
(22) Date of filing: 18.05.2011
(51) Int. Cl.: B62K 15/00, B62K 19/06, B62K 19/24, B62K 19/28

(54) **BICYCLE**

(30) Priority: 31.07.2010 JP 2010182617; 20.05.2010 JP 2010129375
(71) Applicant: TSDesign Ltd., Machida-shi, Tokyo 194-0041 (JP)
(72) Inventor: SUNAMI Takeo, Machida-shi Tokyo 194-0041 (JP)
(74) Representative: Horn, Friedemann Lorenz
(86) International application number: PCT/JP2011/061917
(87) International publication number: WO 2011/145746

(57) **Abstract**

The main structural portions of the frame are standardized and are assembled without welding therebetween, thereby enabling a reduction in the number of components, a simplification of manufacturing processes, and simple attachment and detachment of various types of security components and accessory components. An extruded material or a molded material having an integrally molded structure is cut into required lengths and screwed to one another to form the main structural portions. As a result, the frame is assembled without welding the main structural portions themselves and the main frame is simultaneously made to be a structure of a single bar having no joint, which distributes a load and realizes the body without using a truss structure. Furthermore, a concave groove is formed in the integrally molded structural material, and is used to screw or insert the security components and accessory components, which simplifies attaching and detaching of the components.

## Description

### [Technical Field]

The present invention relates to a bicycle that is readily manufactured, disassembled/assembled, and mounted with add-on components.

### [Background Art]

Bicycles have been familiar means of transportation used widely since the 20th century. Accordingly, a variety of bicycles are manufactured depending on their purpose. The principal portion of the bicycle is the main frame serving as a foundation supporting the entirety. The bicycle is made up of a saddle portion on which a human being sits, a front fork to which a front wheel and a handle changing a travel course are attached, pedals generally rotated by the feet, a chain and a gear transmitting the power of the pedals to a rear wheel, and the rear and front wheels.

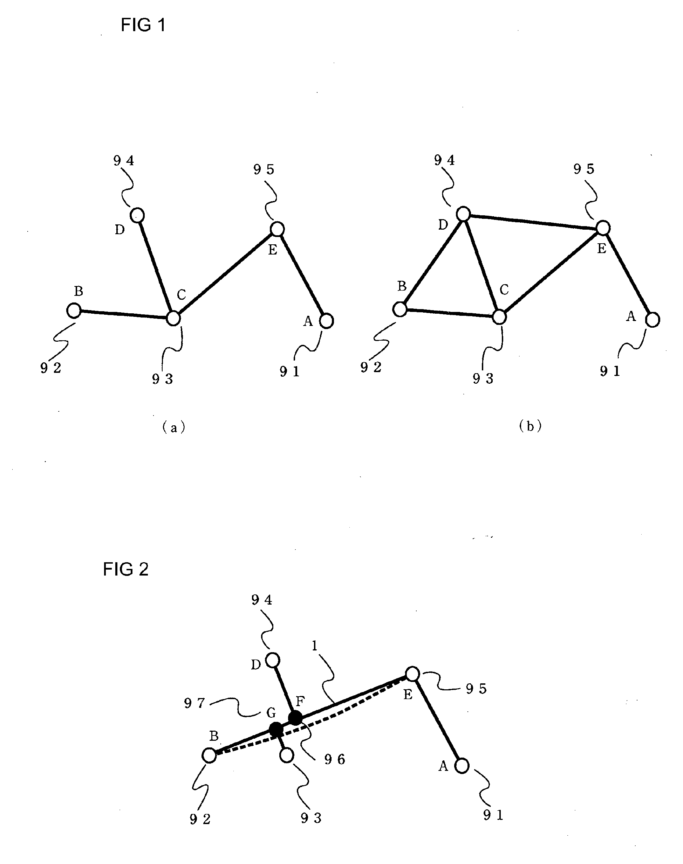

FIG. 1 shows a correlation view of supporting points when a bicycle frame is viewed from the side. Basically, a front wheel shaft 91, a rear wheel shaft 92, and a seating point 94 support a weight of a bicycle and its rider. A crank shaft 93 and a steering shaft 95 for steering the bicycle are added to these. Accordingly, as shown in FIG. 1(a), these may be basically linked by one rod. When a load is applied, stress is concentrated on a junction C with the rod linked to the crank shaft, and the junction becomes a structural weak point in terms of strength.

Accordingly, as shown in FIG. 1(b), most of the real bicycles are configured to form a frame of a so-called diamond truss structure across a structure between the seating point 94 and the rear wheel shaft 92 and between the seating point 94 and the steering shaft 95, thereby increasing overall strength. To avoid making contact with clothing or to facilitate getting on/off, the structure between the seating point 94 and the steering shaft 95 may be omitted. In this case, measures to increase the strength between the crank shaft 93 and the steering shaft 95, for example making the structure thick or forming two structures, may be used.

The bicycle is desirably lightweight to provide movement based on human power. However, to manufacture the frame of the diamond truss widely employed in order to reduce weight and to increase rigidity, as shown in FIG. 1, it is necessary to weld many members to provide connections or to assemble many members using many bolts/nuts. As such, the complexity and extension of the manufacturing process are obstacles to decreasing the manufacturing cost. Further, to attach various security components/accessory components, specific bolts/nuts should be used, and specialized tools and skilled work are required. Thus, the presence of a technical engineer is essential in many cases, and no one can perform the attachment work. Accordingly, this is an obstacle to the attaching/detaching and distribution of security components and/or accessory components.

### [Related Art Document]

### [Patent Document]

Patent Document 1: Japanese Unexamined Patent Application Publication No. 2002-106521

### [Non-Patent Document]

Non-Patent Document 1 : Goro Imura, et al., Bicycle & Machine Elements, published by INAX

### [Disclosure]

### [Technical Problem]

Since a large number of components and frequent bonding work such as welding are required to manufacture the bicycle, it is difficult to further reduce the manufacturing cost, and specialized tools and skilled work are required to attach the security components and/or accessory components. These are the problems to be solved.

### [Technical Solution]

The present invention is mainly characterized in using an integrally molded structural material having the same cross section in whole or for the most part for the main portions of a frame, assembling these main portions with screws, and easily attaching security or accessory components to the integrally molded structural material.

The concept of the present invention will be briefly described in FIG. 2 when the bicycle frame is viewed from the side. A steering shaft 95 and a rear wheel shaft 92 are linked by one rod having basically a linear shape, i.e., a main frame 1, and a seating point 94 and a crank shaft 93 are linked to this main frame 1. Thereby, even when force is applied to the main frame 1 from the seating point 94 and the crank shaft 93, the main frame 1 receives stress as a whole, so that deflection as indicated by a dotted line in FIG. 2, particularly without stress concentration, occurs. To realize this, the main frame 1 is configured so as to be able to easily attach or detach various structural components.

### [Advantageous Effects]

Since the main portions of the frame are integrally molded structural materials having the same cross section for the most part, the number of components can be significantly reduced, and the main portions can be assembled by screws without carrying out bonding work such as welding. As such, manufacturing, transportation, and inventory control are easy and greatly contribute to lowering the cost. Simultaneously, since the main frame has the shape of an integrated rod with no junctions, a load is distributed without being concentrated on any one place during travel. For this reason, a frame that is light weight and highly durable can be manufactured without using a truss structure. Further, due to there being no need for specialized tools, anyone can easily carry out repair and disassembly. Further, since security or accessory components are attached in a set-in type or in a screwing type, there is the advantage of a significant simplification of the work being possible. Accordingly, after the purchase of a bicycle, by changing the attachment positions of the main structural portions or by exchanging them for different components, reconstruction is possible according to a change in the physical size or purpose of a user.

### [Description of Drawings]

FIG. 1 is an explanatory view of a basic structure of a conventional bicycle.
FIG. 2 is an explanatory view showing a basic structure of a bicycle of the present invention.
FIG. 3 is an explanatory view showing a method of carrying out the present invention (Embodiment 1), in which FIG. 3(a) is a left side view, FIG. 3(b) is a right side view, and FIG. 3(c) is a front view.
FIG. 4 is an explanatory view showing one embodiment of a main frame of the present invention, in which FIGS. 4(a) and 4(b) are perspective views, and FIGS. 4(c) and 4(d) are cross-sectional views.
FIG. 5 is an explanatory view showing one embodiment of a slide joint of the present invention.
FIG. 6 is an explanatory view showing one embodiment of a seat joint of the present invention.
FIG. 7 is an explanatory view showing one embodiment of a frame end of the present invention.
FIG. 8 is an explanatory view showing one embodiment of an end plug joint of the present invention.
FIG. 9 is an explanatory view showing one embodiment of a method of fixing a plug clamp of the present invention.
FIG. 10 is an explanatory view showing one embodiment of a plug joint of the present invention.
FIG. 11 is an explanatory view showing one embodiment of a head joint of the present invention, in which FIG. 11(a) is a perspective view, and FIG. 11(b) is a top plan view.
FIG. 12 is an explanatory view showing one embodiment of a snap-on joint of the present invention.
FIG. 13 is an explanatory view showing a folding bicycle according to one embodiment of the present invention (Embodiment 2).
FIG. 14 is an explanatory view showing a folding joint of the folding bicycle of the present invention.
FIG. 15 is an explanatory view showing a bicycle for children according to one embodiment of the present invention (Embodiment 4).
FIG. 16 is an explanatory view showing a sports bicycle according to one embodiment of the present invention

### (Embodiment 5).

FIG. 17 is an explanatory view showing a split-type bicycle according to one embodiment of the present invention

### (Embodiment 3)

### [Mode for Invention]

An object of manufacturing a bicycle by making up a frame of main structural portions, which are not welded to each other, to reduce the manufacturing processes and by facilitating attaching or detaching of security components and accessory components to provide simple maintenance is realized by means of incorporating an extruded metal material such as aluminum or a synthetic resin or a molded material of a fiber-reinforced synthetic resin, which has sufficient strength and can resist bending and twisting using screws. Further, if a groove is formed in this extruded material, the security components and the accessory components are more easily attached or detached.

### Embodiment 1

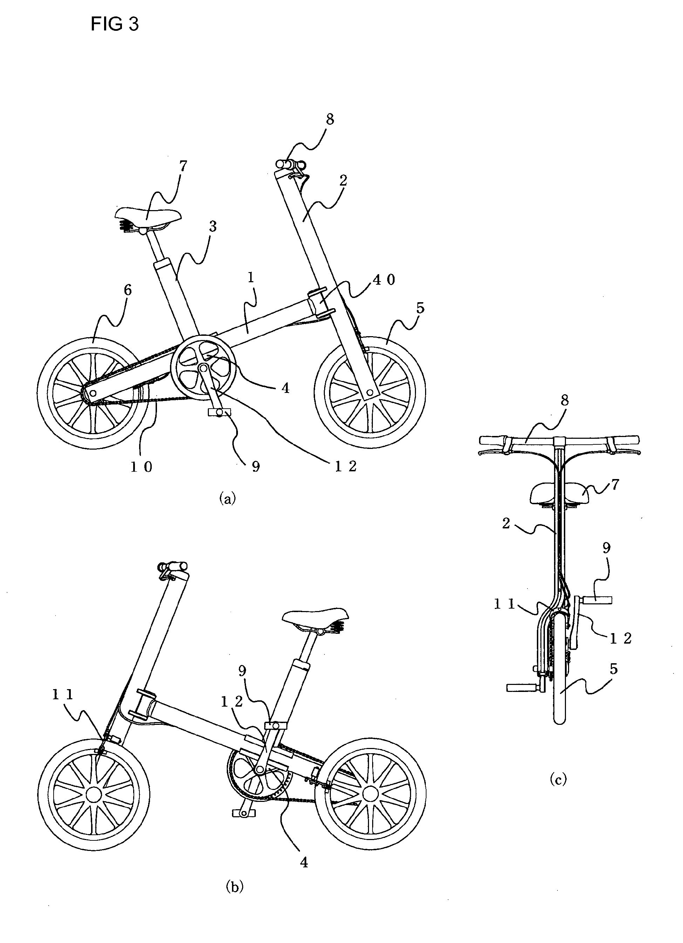

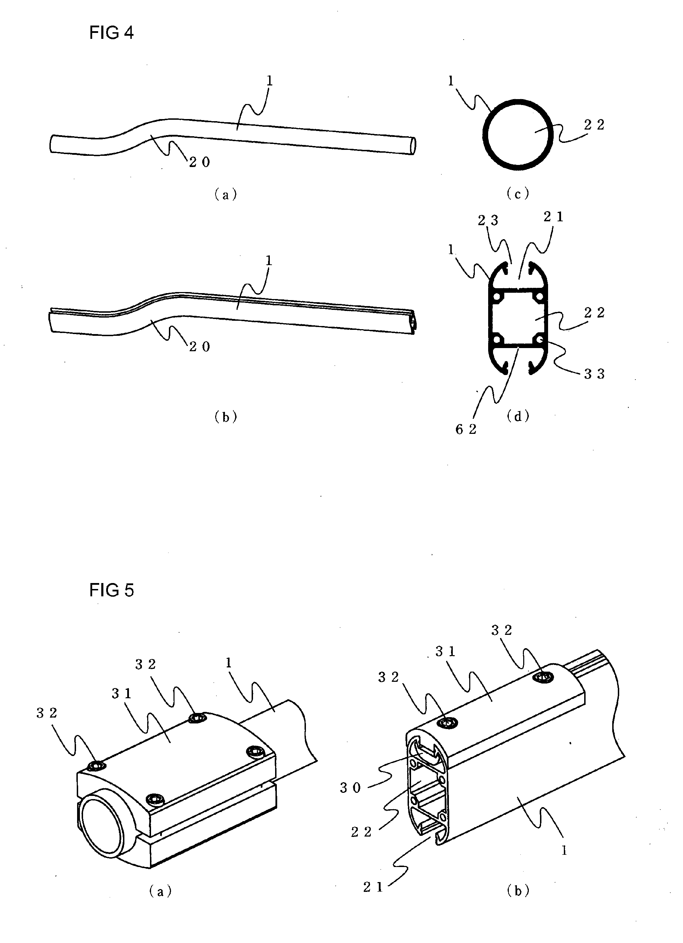

FIG. 3 is a configuration view showing a concrete image of the entirety of the present invention, in which all of a main frame 1, a front fork 2, and a seat pipe 3 use an integrally molded structural material showing a side and a cross section in FIG. 4, particularly an extruded material of metal such as aluminum or a synthetic resin or a molded material of a fiber-reinforced synthetic resin. A case in which no groove is formed in the extruded material is shown in FIGS. 4(a) and 4(c), whereas a case in which grooves are formed in the extruded material is shown in FIGS. 4(b) and 4(d).

In the embodiment shown in FIG. 3, a rear wheel 6 is joined to the main frame 1, and the front fork 2 is joined to the main frame 1 via a joint 40. A seat pipe 3 is joined on an upper side of the main frame 1, and a bottom bracket 4 holding a rotational shaft of cranks 12 is joined on a lower side of the main frame 1.

Further, in the embodiment shown in FIG. 3, the main frame 1 and the front fork 2 are shown to use the same component, because they are completely equal to each other in total length and position of a bent part. In a case in which the same component may be used, this has the effect of reducing the number of components. Further, the seat pipe 3 is also the same integrally molded structural material, and is not provided with a bent part 20 because the bent part 20 is not required.

In the bicycle shown in FIG. 3, to support the wheel in a cantilever form, the bent part 20 is provided. However, in principle, a straight frame is also possible. In this case, even when a position of the center of gravity of one body of a person and a bicycle is vertically located above a contact of the wheel with the ground, the front fork is not always perpendicular to the ground. However, this is insignificant in actual practice.

Further, the term used to denote the front fork is thought to have been derived from that of a front end that branches off like a fork used as tableware. However, the front fork 2 of the present invention has an integrated shape, and strictly speaking, this term is not suitable for it. However, since a pipe supporting the front wheel is generally called a front fork, the term "front fork" was settled upon and is used in the description of the present invention for the sake of convenience.

The other components, for instance components indispensable to travelling such as a driving device based on front and rear wheels 5 and 6, pedals 9, a chain 10, and cranks12, a handle 8, and a brake 11, are the same as those of the common bicycle.

Further, as shown in FIGS. 4(c) and 4(d), the integrally molded structural material includes a hollow part 22. Further, an embodiment in which concave grooves having openings 23 facing outward in opposite ends are formed is also shown at the same time. The main frame 1, the front fork 2, and the seat pipe 3 are incoporated by screws regardless of whether the groove is present. The hollow part 22 is not always essential. However, since the strength to resist bending and twisting is increased when a pipe of the same weight is generally hollow and increased in diameter, a hollow pipe is widely used.

Further, this hollow part 22 may be used for the purpose of storing various components. For example, a battery supplying power to various electrical components, or an electronic device such as a navigation system or a radio may be stored therein. Then, a structure subject to small irregularities and thus associated with a lower fear of failure caused by unexpected shocks may be realized.

Since the main frame 1 is connected with the seat pipe 3 and the bottom bracket 4 with high strength, a slide joint mainly shown in FIG. 5 is used. The case in which no grooves are formed in the extruded material is shown in FIG. 5(a), whereas the case in which the grooves are formed in the extruded material is shown in FIG. 5(b). With the grooves, an inner plate nut 30 is slid into each groove of the main frame 1, and a base 31 is covered from the outside of the main frame 1 and is fastened by connection screws 32. Thereby, the inner plate nut 30 is incorporated with the base 31. If one end of the seat pipe 3 is joined to the portion of the base 31, the structure shown in FIG. 3 may be realized. Further, by unfastening the connection screws 32, the base 31 may be slidably displaced, so that a fixing position can be changed depending on the physical size. Simultaneously, an effect of reinforcing the main frame 1 can be also expected thanks to the base 31.

The inner plate nut 30 of FIG. 5 may also be placed and inserted from an upper portion of the groove. As such, even after the entire bicycle has been assembled, the security and accessory components may be incorporated at any portion of the groove in an add-on fashion. Accordingly, the degree of freedom in attaching or detaching the security and accessory components can be increased, and the work time can be remarkably shortened.

Further, to attach the saddle 7, a seat post 34 distributed generally may be used. As such, if the saddle 7 is inserted into the hollow part 22 of the seat pipe 3 of the integrally molded structural material shown in FIG. 4 and is fastened from the periphery, a height of the saddle 7 may be freely adjusted to the height of a rider.

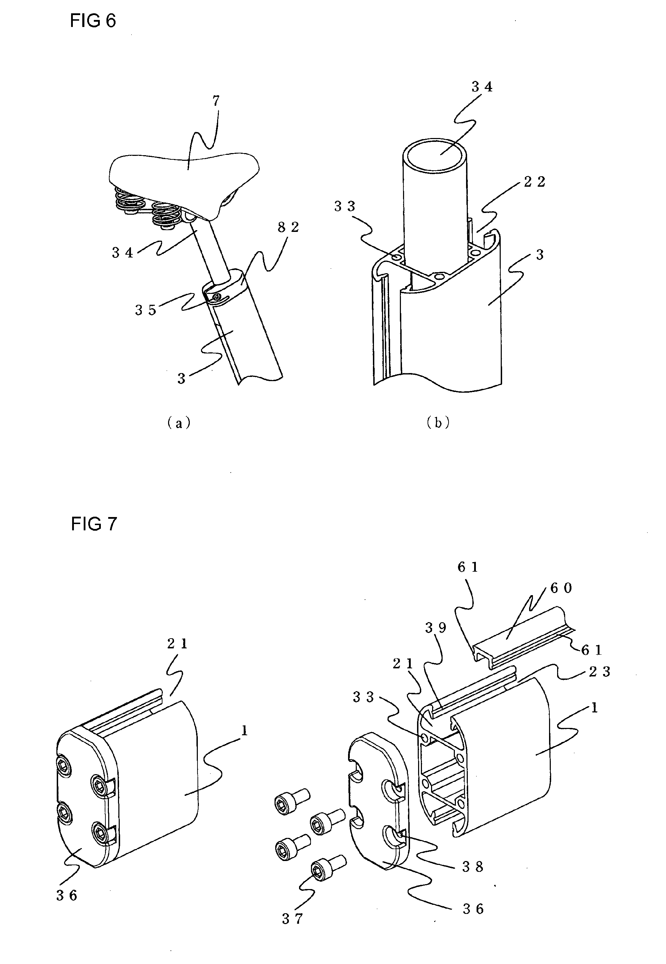

A method of attaching the saddle 7 when the hollow part 22 is present in the seat pipe 3 is shown in FIG. 6. The seat post 34 extending from the saddle 7 is inserted into the hollow part of the seat pipe 3, and a saddle fixing screw 35 on a seat clamp 82 attached to the seat pipe 3 is fixedly fastened.

When a cross section formed by cutting the integrally molded structural material is exposed, there is a possibility of dirt entering or contaminating the end of the main frame 1 or the front fork 2. As such, an end cap 36 as shown in FIG. 7 is fixed to the end of the main frame 1 or the front fork 2 by cap fastening screws 37 inserted into cap fastening holes 38. The cap fastening screws 37 are fastened by threading through-holes 33 formed in the frame. Further, the end cap 36 may function as a base for attaching an accessory component(s), which has a separate function such as a transmission or a reflector, to the frame end.

Additionally, when the concave grooves 21 are formed in the main frame 1 or the front fork 2, and in the seat pipe 3, there is a fear of dirt entering and collecting on the concave grooves 21 in proportion to the period of outdoor use. Accordingly, in accordance with the embodiment of the present invention, this problem is solved by covering a groove cover 60 formed of a soft material such as rubber or synthetic resin on each groove. Set-in ridges 61 are formed on the groove cover 60. These ridges are fitted into the cover set-in grooves 39 shown in FIG. 7. Thereby, the groove cover is adapted to be prevented from coming off by itself as long as a strong force is not applied. Without the concave grooves 21, the groove covers are not required.

Thus, even when the main frame 1 used for the description of the present invention basically has any cross section, the present invention can be realized. However, if the concave grooves are formed in the main frame as described below, the object of the present invention can be more easily realized.

Further, the above description has been made of the case in which the concave groove has a wider inner portion than the opening. When the interior is wide, this is excellent because there is no danger of the connection components coming off even in an unanticipated situation in which the screws are unfastened. In principle, even when the opening and the interior have the same width, or even when the interior is narrower, the present invention can be carried out. In this case, the concave groove can be more easily formed, but a study into exerting a sufficient fixing force is required, or a thorough daily check should be done in order to cope with a contingency in which the screws becomes loose.

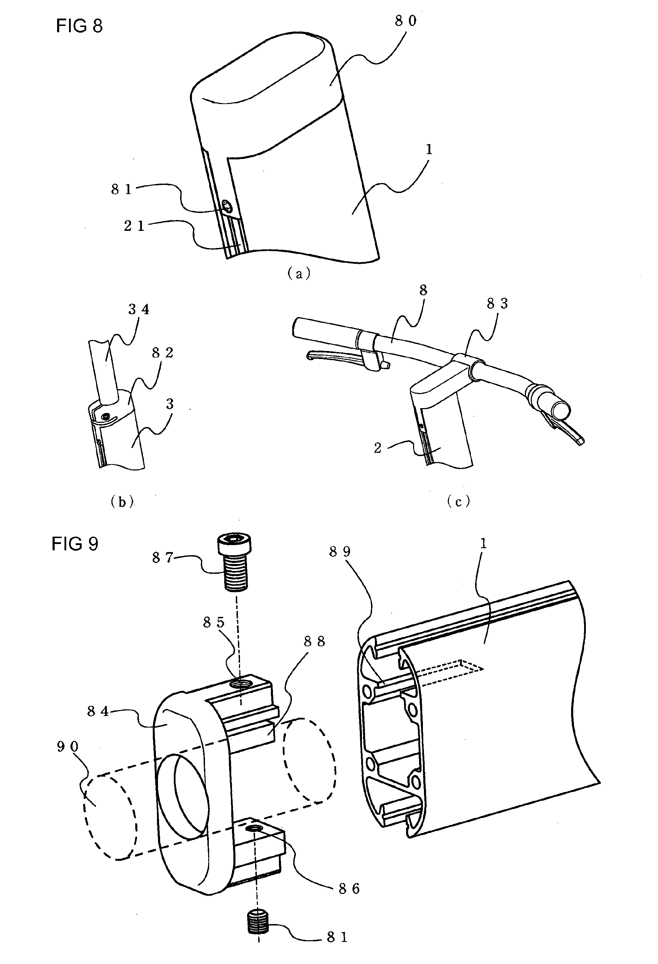

To fix a component such as a saddle 7 or a handle 8 attached to the end of the frame, an end plug joint 80 shown in FIG. 8(a) is used. The end plug joint 80 is fixed to the main frame 1 by a hollow setscrew 81. A screw hole into which the hollow setscrew 81 is inserted is located at a portion where the end plug joint 80 is inserted into the concave groove 21. By fastening the hollow setscrew, the main frame 1 is pressed to produce a fixing force. Alternatively, the hollow setscrew 81 may be provided with a head, and pass through the main frame 1 to prevent it from coming off. In the figure, the case of the main frame 1 is shown. However, if the main frame 1 is replaced by the front fork 2 or the seat pipe 3, the present invention may be similarly carried out. The shape of a tip is changed based on this structure, so that a seat clamp 82 for fixing the seat post 34 as shown in FIG. 8(b) or a handle clamp 83 for attaching the handle 8 as shown in FIG. 8(c) can be manufactured.

Meanwhile, to fix the main component such as the seat post 34 or the accessory component, a plug clamp 84 as shown in FIG. 9 as one embodiment of the present invention may be used rather than the structure as if fastened from the periphery. This is to press a pressing part 88 that is a part of the plug clamp 84 against the fitted the seat post 34 and an attaching part 90 other than the seat post by fitting the plug clamp 84 into the main frame 1 having a cutout part 89 so as to allow the plug clamp 84 to be inserted and by fastening a fixing screw 87 through a fixing screw hole 85 formed in the plug clamp 84, and thus fix the seat post 34 and the attaching part 90 using frictional force.

In the case of this structure, a hollow setscrew hole 86 is formed on the opposite side of the fixing screw hole 85, and the hollow setscrew 81 is fastened. Thereby, the main component such as the seat post or attaching part 90 such as the accessory component can be prevented from coming off. Alternatively, in place of the hollow setscrew hole 86, the same fixing screw hole 85 may be formed, and the fixing screws 87 may be fastened from the left and right sides or from the upper and lower sides. Which method is used may be selected depending on the required strength with which an attaching component is attached.

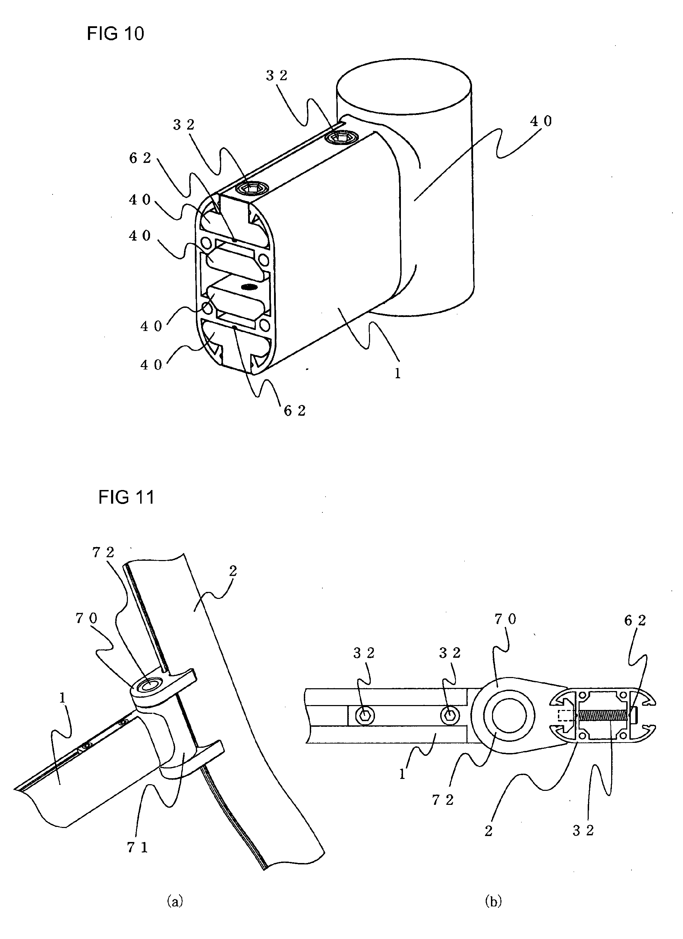

To connect the front fork 2 and the main frame 1, a plug joint 40 shown in FIG. 10 is used. The joint 40 is fixed by connection screws 32. Portions of the joint 40 which are fitted into the concave groove 21 and the hollow part 22 of the main frame 1 are mutually pulled to press the main frame 1 by fastening the connection screws 32, thereby exerting a fixing force. Further, it is sufficient if an end of the main frame 1 is cut at a right angle. Not only is the workability also increased because welding of a large component is not required, but the number of components is reduced to facilitate inventory control by standardization as standard goods.

A head clamp 70 shown in FIG. 11 is coupled with the front fork 2 by connection screws 32, and is simultaneously coupled with a steering shaft 72 passing through a head joint 71. The steering shaft 72 is rotated in the head joint 71, thereby moving the front fork 2 to allow a steering operation to be performed during travel. Further, when the concave groove 21 is formed in the front fork 2, the head clamp 70 is shaped so as to be caught in the groove. Thereby, although the connection screws 32 have become loose, the risk of the head clamp 70 coming off is low.

The front fork 2 and the head clamp 70 are fixed by the connection screws 32. However, since an attaching hole is made in an arbitrary portion using an attaching hole previously made in the front fork 2 as well as the guide groove 62, the position of attachment may be changed so as to be appropriate to the rider's physical size or intended use. Even when a screw hole is made in the future, there is a low risk of being out of center because the guide groove 62 guiding a drill is formed. Alternatively, in place of the front fork 2, the front fork of a bicycle that is generally distributed may be attached to the head joint 71, thereby constituting the frame.

Additionally, even when any set of the head joint 71 and the main frame 1 and the head clamp 70 and the front fork 2 are joined by welding without using the screws, the other set can be attached/detached by the connection screws 32. As such, the effect of the present invention can be brought about, whereby the main portions of the frame can be dissembled/assembled by the screws.

Typically, when a person gets on and travels, there is sometimes the application of strong vibrations or a sudden force. As such, a sufficent amount of strength is required to connect the main frame 1, the front fork 2, and the seat pipe 3. For this reason, the connection components previously shown in FIGS. 5 and 8 are required. However, when the security components and accessory components, to which a weak force is applied compared to the human body, are attached to the frame having the concave grooves, an easier method can be realized using these grooves.

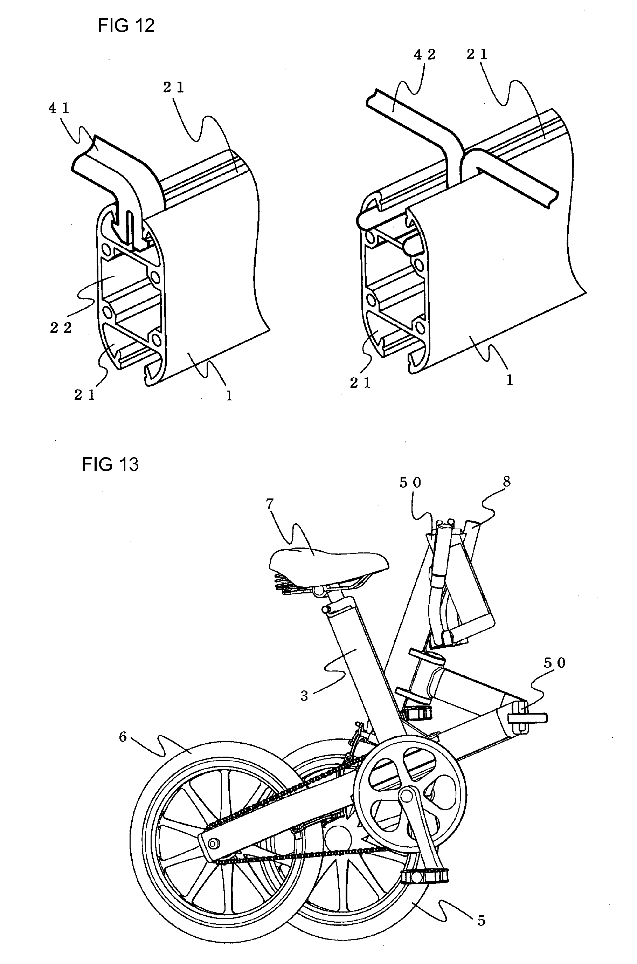

These are a claw-shaped snap-on joint 41 and a wire-shaped snap-on joint 42, both of which are shown in FIG. 12. The claw-shaped snap-on joint 41 is designed to be caught in the concave groove 21 by protruding claws, and is mounted by pushing from the upper side. If the claw-shaped snap-on joint 41 is manufactured to have a size big enough to withstand a load, a variety of applications such as a head light, a mudguard, a holder, etc. may be considered.

The wire-shaped snap-on joint 42 is manufactured so that the thickness of the wire and the length of a plug part are appropriate for the intended use, and thereby various applications may be considered. Particularly, the wire-shaped snap-on joint 42 has the effect of attaching a component such as a carrier or a cargo that is generally made of a metal wire.

When the dimensions of these grooves are standardized, the third-party sale of accessories based on a variety of claw-shaped snap-on joints and wire-shaped snap-on joints can be expected, this being seen as a ripple effect. However, in the case of a component having a high load, it is preferable to also use screwing in combination, using the inner plate nut 30 shown in FIG. 5. Further, the example in which the main frame 1 is used as a set-in place of the claw-shaped snap-on joint 41 or the wire-shaped snap-on joint 42 is shown. However, the snap-on joint may also be set in the other portion having the same groove, for instance the front fork 2 or the seat pipe 3.

### Embodiment 2

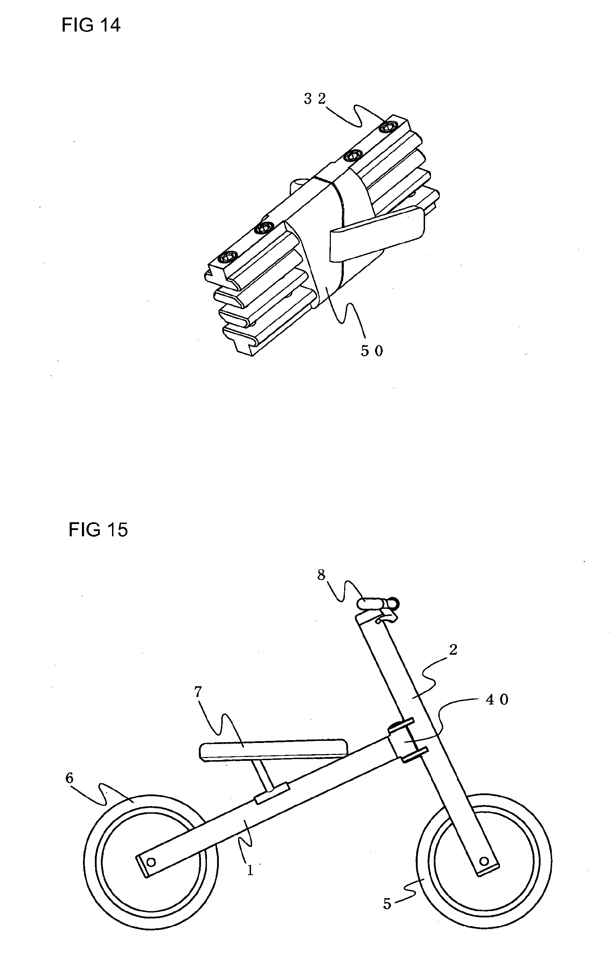

A folding bicycle to which the present invention has been applied is shown in FIG. 13. Since the main frame 1 and the front fork 2 are simple integrally molded structural materials, these are cut halfway, and the cut portions are interconnected by a folding joint 50 shown in FIG. 14 and connection screws 32. Then, the bicycle that can be folded at this portion as shown in FIG. 13 can be realized. In the description of this embodiment, a frame with grooves is used. This embodiment may be similarly applied to a case without grooves. In the case of the frame with grooves, the folding joint 50 can be easily manufactured by applying a structure having the plug joint 40 shown in FIG. 10. In FIG. 13, an example in which the handle 8 is also folded is shown. However, if necessary, whether to fold the handle may be selected.

The advantage of the present invention is that a previously purchased bicycle, which is not a folding type based on the present invention, can be simply reconstructed into the folding type in the future as needed. The main frame 1 and the front fork 2 are cut by a typical metal cutter, and the cut portions may be interconnected using the folding joint 50 and the connection screws 32. Further, when holes giving passage to the connection screws 32 are formed, the guide groove 62 may be used, thereby reducing the risk of it being off-center. This is one of the great advantages of the present invention which is that professional skill such as welding and installations are not required.

### Embodiment 3

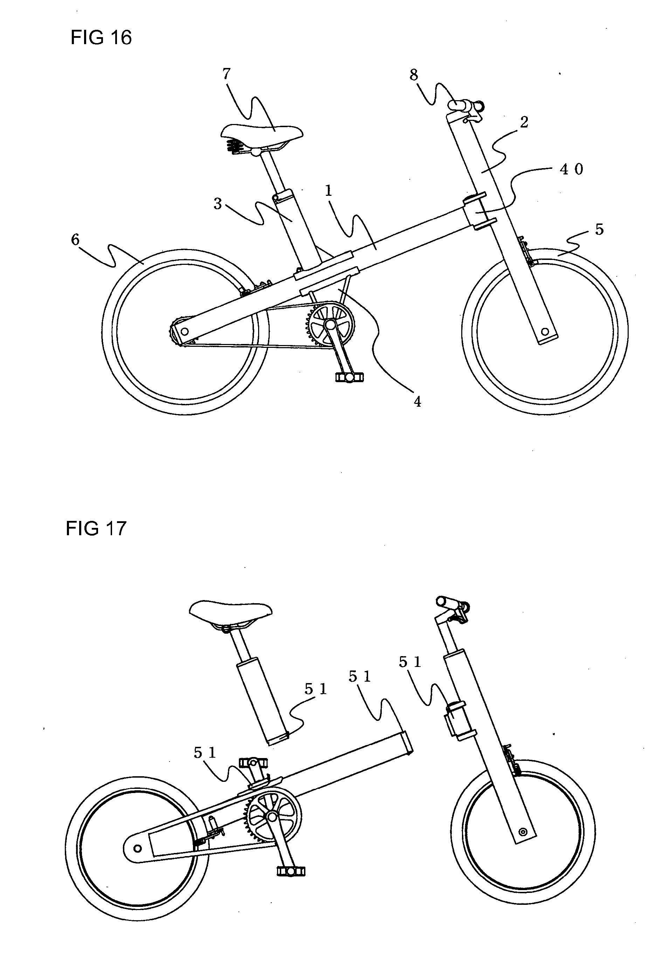

Another embodiment of the present invention is shown in FIG. 17. Main coupling portions of the frame, and one or both of a coupling part of the main frame 1 and the front fork 2 and a coupling part of the main frame 1 and the seat pipe 3 are replaced by split joints 51, each of which is splittable without using a tool. Thereby, an effect similar to the folding type in which the frame is easily split, and is housed and carried in a compact fashion, can be realized. The joint of each part may be easily replaced by the split joint 51 using the coupling structure of the frame material and the joint based on the screws described in Embodiment 1.

### Embodiment 4

Another embodiment of the present invention is shown in FIG. 15. This is used for an infant, is not provided with the driving apparatus based on the pedals and the chain, and travels by kicking. The structure is simpler, and there are two main structures, the main frame 1 and the front fork 2. In the description of this embodiment, the frame having the concave grooves is used. However, this embodiment may be similarly applied to a case without grooves.

If the handle is formed in the same plug type as the saddle as shown in FIG. 6, its height can be freely changed. As such, the height can not only be sequentially increased in proportion to the growth of a child, but the driving apparatus based on the pedals and the chain can be attached in the future. Thus, the bicycle can be reconstructed into a typical pedal-driven bicycle. Alternatively, the main frame 1 and the front fork 2 may be exchanged for large-size members by converting the joint 40, and thereby it is possible to cope with a change in physical size. This is also one of the advantages of the present invention that can be configured using only the screws and connection components without using welding.

### Embodiment 5

The present invention can deal with a varity of purposes by previously preparing frames having different dimensions, and selecting and assembling the frames by request, because very simple frames are configured to be connected using screws. This provides a great advantage in terms of inventory control. For example, a sports bicycle is shown in FIG. 16. In this sports bicycle, a diameter of the wheel is increased while the height above ground of the driving apparatus configured of the pedals and the chain is maintained, so that a bicycle suitable for high-speed travel can be made. In the description of this embodiment, a frame having concave grooves is used. However, this embodiment may be similiarly applied to a case without grooves as previously described.

### Embodiment 6

So far, in the description of the present invention, a two-wheel vehicle having a front wheel and a rear wheel has been used. However, if any one of the front wheel and the rear wheel is formed using two wheels, a three-wheel vehicle may be made. Further, if the front wheel and the rear wheel are formed using two wheels, a four-wheel vehicle may be made. In these cases, the vehicle can be realized by expanding a wheel shaft of the two-wheel portion and connecting the two wheels to opposite ends of the expanded shaft, or by coupling two frame parts configured based on the main frame 1 in parallel left and right. Accordingly, the present invention is not limited to the two-wheel vehicle. Further, in this case, since it is sufficient if one or both of the front wheel and the rear wheel are added to the wheel shaft in the future, the main frame, the seat pipe, and the front fork may be converted.

However, when the two wheels are mounted on any wheel shaft, this shaft is always parallel to the ground. As such, the structure of this wheel shaft must be inclined or flexible when performing a turnabout.

### Embodiment 7

In the above embodiment of the present invention, a bicycle in which the pedals are driven by human power is given. As another embodiment of the present invention, there is a power assistant based on an electric motor as an external power unit. A mechanism capable of applying power of the electric motor via the bottom bracket 4 is attached to the main frame 1, and a signal of a torque sensor detecting a pedal force to the pedals is processed. If a motorized force corresponding to the pedal force is transmitted to the real wheel via the crank shaft and the chain 10, this becomes a motorized assistant bicycle.

In addition to the electric motor, a battery supplying power to the motor, a switch turning on or off the power source, and an electronic circuit controlling the supply of the power to the motor and the charge and discharge of the battery are required at a minimum. These are attached to proper places such as the main frame 1 or the front fork 2, and the seat pipe 3 taking advantage of the object of the present invention, or may be housed in the hollow part when the frame has the hollow part.

### Embodiment 8

Embodiment 7 provided the motorized assistant bicycle. If the bicycle is driven only by the motorized force without assistance, it becomes a motorized bicycle. In this case, the pedals are not necessary. However, on the assumption that the battery has been discharged, it is advantageous for the pedals to be attached for emergency purposes. Meanwhile, if the bicycle exists because it is meant as a vehicle that is essentially moved by human power, Embodiment 8 should be rephrased as a motorized two-wheel vehicle, but the object of the present invention is not changed.

### Embodiment 9

A motorized assistant bicycle is given in Embodiment 7, and a motorized two-wheel vehicle was given in Embodiment 8. However, an internal-combustion engine may be used as a power source. In this case, it is convenient that an accelator similar to that of an motorized two-wheel vehicle be added to a right-handed grip of the handle, and that the rotation of the engine be controlled.

### Embodiment 10

So far, the embodiment of the power assistant based on the electric motor or the internal-combustion engine has been provided. The present invention is configured so that the power device can be easily mounted, and be easily attached/detached. Thus, there is a fear of these external power devices being stolen. Accordingly, to prevent this, a mechanism such as a lock is installed so they are able to be attached/detached only by the owner or a person entrusted by him/her.

### Embodiment 11

So far, the present invention has been described using a case based on a chain used as a driving force transmission device. However, even in a case in which the shaft is driven using a rubber belt driving or bevel gears, the present invention can be carried out in a completely similar fashion.

### [Industrial Applicability]

The integrally molded structural material based on the extruded material or the molded material, and the structure capable of meeting various purposes based on attaching/detaching of the components to/from the concave grooves formed in this structural material can be applied to various other instruments.

### [Description of Reference Numerals]

- 1: main frame
- 2: front fork
- 3: seat pipe
- 4: bottom bracket
- 5: front wheel
- 6: rear wheel
- 7: saddle
- 8: handle
- 9: pedal
- 10: chain
- 11: brake
- 12: crank
- 20: bent part
- 21: concave groove
- 22: hollow part
- 23: concave groove opening
- 30: inner plate nut
- 31: base
- 32: connection screw
- 33: through-hole
- 34: seat post
- 35: saddle fixing screw
- 36: end cap
- 37: cap fastening screw
- 38: cap fastening hole
- 39: cover set-in groove
- 40: plug joint
- 41: claw-shaped snap-on joint
- 42: wire-shaped snap-on joint
- 50: folding joint
- 51: split joint
- 60: groove cover
- 61: set-in ridge
- 62: guide groove
- 70: head clamp
- 71: head joint
- 72: steering shaft
- 80: end plug joint
- 81: hollow setscrew
- 82: seat clamp
- 83: handle clamp
- 84: plug clamp
- 85: fixing screw hole
- 86: hollow setscrew hole
- 87: fixing screw
- 88: pressing part
- 89: cutout part
- 90: attaching component
- 91: front wheel shaft
- 92: rear wheel shaft
- 93: crank shaft
- 94: seating point
- 95: steering shaft
- 96: junction F
- 97: junction G

## Claims

1. A bicycle, in which a main frame is a branch-free rod-like integrally molded structural material having the same cross-sectional shape in whole or for the most part, and a wheel is supported on the main frame in a cantilever fashion.

2. The bicycle according to claim 1, wherein at least two of three main structures of a front fork, the main frame, and a seat pipe are of the integrally molded structural materials having the same cross-sectional shape.

3. The bicycle according to claim 2, wherein the bicycle is a rigid body in which main parts of the three integrally molded structural materials are assembled using screws.

4. The bicycle according to claim 3, wherein the integrally molded structural material has a hollow structure.

5. The bicycle according to claim 4, wherein the integrally molded structural material is formed with a concave groove, and a main component and an accessory component are assembled in part or in whole using the groove.

6. The bicycle according to claim 5, wherein an opening facing an outside of the concave groove of the integrally molded structural material is narrower than an inner portion of the groove.

7. The bicycle according to claim 5, wherein the accessory component is set in the concave groove of the integrally molded structural material, and is fixed to the integrally molded structural material.

8. The bicycle according to claim 7, wherein the accessory component is fixed to the integrally molded structural material using one or both of an inner plate nut and a screw.

9. The bicycle according to claim 5, wherein the main component or the accessory component is fixed to the integrally molded structural material by an end plug joint and a hollow setscrew.

10. The bicycle according to claim 5, wherein the main component or the accessory component is fixed to the integrally molded structural material by a plug clamp and a hollow setscrew.

11. The bicycle according to claim 5, wherein the integrally molded structural material is formed with a guide groove below the concave groove thereof which facilitates positioning when forming an attaching hole.

12. The bicycle according to claim 2, wherein an external power device is installed on the integrally molded structural material.

13. The bicycle according to claim 12, wherein the integrally molded structural material is formed with a concave groove, and the concave groove is used to assemble at least two of the front fork, the main frame, the seat pipe, and the external power device using screws to become a rigid body.

14. The bicycle according to claim 13, wherein the external power device includes an electric motor, a battery, and a controller.

15. The bicycle according to claim 14, wherein one or both of the electric motor and the battery have a lock, and are attached/detached by a key.

16. The bicycle according to claim 12, wherein a power receiving mechanism charging a battery is installed.

17. The bicycle according to claim 16, wherein the power receiving mechanism is an electrical contact that makes mechanical contact.

18. The bicycle according to claim 16, wherein the power receiving mechanism does not make mechanical contact.

19. The bicycle according to claim 16, wherein the battery is charged with electricity generated from a solar cell installed on the bicycle in parallel with the power receiving mechanism.

20. The bicycle according to claim 13, wherein the external power device includes an internal-combustion engine and a fuel tank.

21. The bicycle according to claim 20, wherein one or both of the internal-combustion engine and the fuel tank have a lock, and are attached/detached by a key.

22. The bicycle according to claim 14, wherein one or both of the battery and the controller are housed in the integrally molded structural material in part or in whole.
